# FASCICULE DE BREVET EUROPEEN

(11) **EP 0 427 841 B1**
(45) Date de publication et mention de la délivrance du brevet: **21.06.1995**
(21) Numéro de dépôt: 90908524.3
(22) Date de dépôt: 28.05.1990
(51) Int. Cl.: H02M 3/155

(54) **CONVERTISSEUR ELECTRIQUE A PLUSIEURS BOBINES D'INDUCTION**
ELEKTRISCHER KONVERTER MIT MEHREREN INDUKTIONSSPULEN
ELECTIC CONVERTER WITH SEVERAL INDUCTION COILS

(30) Priorité: 02.06.1989 FR 8907562
(43) Date de publication de la demande: 22.05.1991
(73) Titulaire: AGENCE SPATIALE EUROPEENNE, F-75738 Paris Cedex 15 (FR)
(72) Inventeur: SPRUIJT, Herman, J., N., NL-2242 BV Wassenaar (NL)
(74) Mandataire: Vanderperre, Robert
(86) Numéro de dépôt international: EP9000904
(87) Numéro de publication internationale: WO9015469

(56) Documents cités:
- EP-A- 0 044 663
- EP-A- 0 090 782
- EP-A- 0 266 743
- DE-A- 3 709 989
- US-A- 4 262 328
- US-A- 4 720 668
- PATENT ABSTRACTS OF JAPAN vol. 6, no. 67 (E-104)(945) 28 avril 1982, & JP-A-57 9259 (FUJITSU) 18 janvier 82, voir le document en entier

## Description

La présente invention concerne des montages de convertisseurs de courant électrique comportant plusieurs bobines d'induction.

Un convertisseur de courant électrique est un dispositif servant à contrôler le courant électrique circulant entre une source de courant et une charge. Un montage de convertisseur électrique classique comprend essentiellement un dispositif de commutation électrique et un organe de couplage magnétique. Dans un montage classique le dispositif de commutation est constitué par exemple d'un transistor à effet de champ type métal-oxyde-semiconducteur (MOSFET) et d'une diode, et l'organe de couplage magnétique consiste en une bobine d'induction parfois associée à un filtre électrique d'entrée ou de sortie.

Dans un tel montage le transistor est commuté à une fréquence élevée (par exemple 50 kHz) de manière à être rendu conducteur en état de saturation pendant une fraction déterminée d'une période de temps. La diode est conductrice uniquement pendant que le transistor n'ést pas conducteur. Les éléments de couplage magnétique sont dimensionnés de manière que le courant et la tension ne présentent pas d'ondulations trop importantes. DE-A-3709989 expose un exemple de mode de réalisation d'un montage convertisseur.

La présente invention a pour but de procurer une famille de montages convertisseurs visant à offrir un large éventail de possibilités pour répondre de façon optimale à chaque application particulière.

L'invention concerne des convertisseurs électriques comprenant au moins trois éléments réactifs connectés en série, à savoir une première bobine d'induction, un premier condensateur et une deuxième bobine d'induction, le premier condensateur étant connecté entre les première et deuxième bobines d'induction en formant ainsi un premier point de jonction et un deuxième point de jonction, et comprenant également un dispositif de commutation formé par un transistor de commutation et une diode, le transistor étant commandé à une fréquence élevée de manière à être rendu conducteur pendant une fraction de chaque période de la fréquence.

Conformément à l'invention, le dispositif de commutation comprend en outre un second condensateur et une troisième bobine d'induction. Le second condensateur et un premier élément du groupe formé par le transistor et la diode étant connectés en série l'un avec l'autre et à l'un des premier et deuxième points de jonction, tandis que l'autre élément du groupe précité est connecté à l'autre desdits premier et deuxième points de jonction, la connexion du second condensateur avec le premier élément du groupe précité formant un troisième point de jonction. La troisième bobine d'induction est connectée entre le troisième point de jonction et l'autre desdits premier et deuxième points de jonction, de manière que la diode soit conductrice uniquement lorsque le transistor est non conducteur et qu'elle soit bloquante chaque fois que le transistor est rendu conducteur.

Diverses variantes de montage peuvent être réalisées conformément à l'invention, chacune d'elles pouvant être ajusté de façon optimale pour une application particulière par un dimensionnement adéquat des éléments réactifs de manière à réduire à un minimum les ondulations du courant et de la tension de sortie. De plus, tous les montages ont des propriétés bidirectionnelles, c'est-à-dire que chacune des deux paires de bornes du quadripôle que constitue chaque montage convertisseur peut être utilisée aussi bien comme entrée que comme sortie.

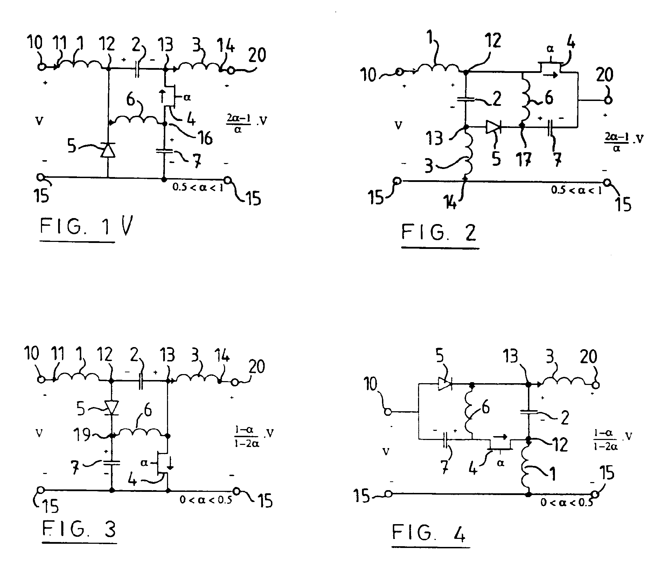

D'autres particularités et avantages de l'invention apparaîtront à la lecture de la description détaillée qui suit, dans laquelle l'invention est exposée en détail à l'aide des dessins joints. Les figures 1 à 16 illustrent divers modes de connexion du dispositif de commutation et des organes de couplage magnétique.

Comme on peut le voir dans les dessins joints, tous les montages illustrés comprennent trois éléments réactifs en série : une première bobine d'induction 1, un condensateur 2 et une deuxième bobine d'induction 3. Un transistor de puissance travaillant en commutation 4 et une diode 5 sont connectés aux points de jonction 12 et 13 entre les éléments réactifs 1, 2 et 3 de telle manière que le transistor 4 et la diode 5 ne soit jamais simultanément conducteurs, c'est-à-dire que la diode 5 est conductrice lorsque le transistor 4 n'est pas conducteur et que la diode 5 est bloquante chaque fois que le transistor 4 est rendu conducteur.

Le montage de la figure 1 représente un convertisseur abaisseur avec tension non inversée et courants d'entrée et de sortie continus. Dans ce montage, les éléments réactifs 1, 2 et 3 sont connectés en série entre les bornes d'entrée 10 et de sortie 20. La diode 5 est connectée entre la borne commune 15 et le point de jonction 12. Le second condensateur 7 et le transistor 4 sont connectés en série entre la borne commune 15 et le point de jonction 13. Une troisième bobine d'induction 6 est connectée d'une part au point de jonction 12 et d'autre part au point de jonction 16 entre le condensateur 7 et la source du transistor 4.

Dans le montage de la figure 2, les éléments réactifs 1, 2 et 3 sont connectés en série entre la borne d'entrée 10 et la borne commune 15. Le transistor 4 est connecté entre le point de jonction 12 et la borne de sortie 20. La diode 5 est connectée en série avec un second condensateur 7 entre le point de jonction 13 et la borne de sortie 20. Une troisième bobine d'induction 6 est connectée d'une part au point de jonction 12 et d'autre part au point de jonction 17 entre la diode 5 et le condensateur 7. Ce montage sert également de convertisseur abaisseur avec tension non inversée.

Dans le montage de la figure 3, les éléments réactifs 1, 2 et 3 sont connectés en série entre les bornes d'entrée 10 et de sortie 20. Le transistor 4 est connecté entre le point de jonction 13 et la borne commune 15. La diode 5 est connectée en série avec le condensateur 7 entre le point de jonction 12 et la borne commune 15. Une troisième bobine d'induction 6 est connectée d'une part au point de jonction 19 entre la diode 5 et le condensateur 7 et d'autre part au point de jonction 13. Ce montage sert de convertisseur élévateur avec tension non inversée et courants d'entrée et de sortie continus.

Le montage de la figure 4 sert également de convertisseur élévateur avec tension non inversée. Les éléments réactifs 1, 2 et 3 sont connectés en série entre la borne commune 15 et la borne de sortie 20. La diode 5 se trouve connectée entre la borne d'entrée 10 et le point de jonction 13. Un second condensateur 7 se trouve connecté en série avec le transistor 4 entre la borne d'entrée 10 et le point de jonction 12. Une troisième bobine d'induction 6 se trouve connectée entre le point de jonction 13 et le point de jonction 16 entre le second condensateur 7 et le transistor 4.

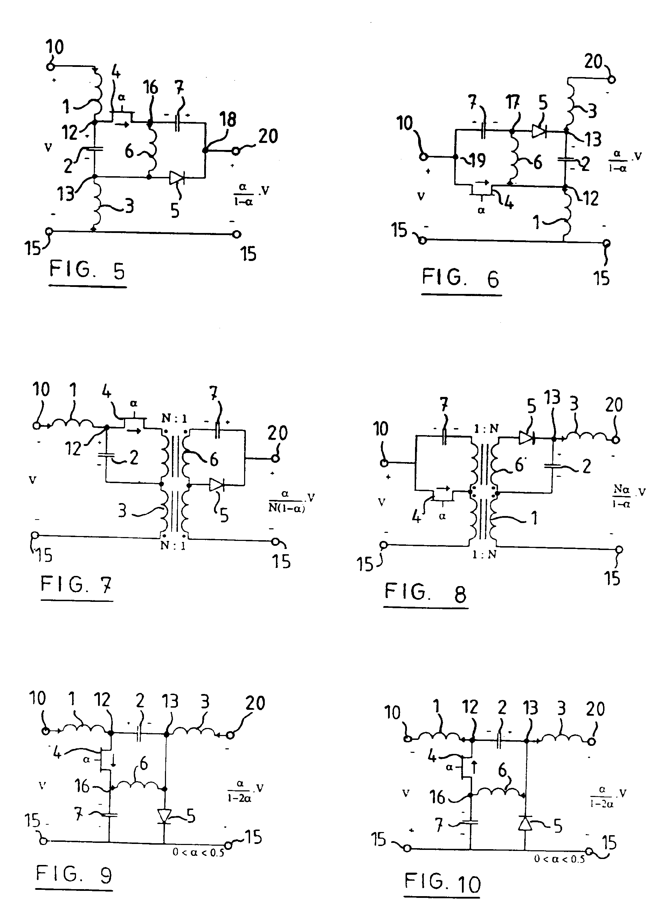

Le montage de la figure 5 sert de convertisseur abaisseur/élévateur avec tension non inversée et courants d'entrée et de sortie continus. Dans ce montage, les éléments réactifs 1, 2 et 3 sont connectés entre la borne d'entrée 10 et la borne commune 15. Le transistor 4 est connecté en série avec un second condensateur 7 entre le point de jonction 12 et une borne 18 reliée à la borne de sortie 20. La diode 5 est connectée entre le point de jonction 13 et la borne 18 précitée. Une troisième bobine d'induction 6 est connectée d'une part au point de jonction 16 entre le drain (sortie) du transistor 4 et le condensateur 7 et d'autre part au point de jonction 13.

Dans le montage de la figure 6, les éléments réactifs 1, 2 et 3 sont connectés en série entre la borne commune 15 et la borne de sortie 20. Le transistor 4 est connecté entre le point de jonction 12 et une borne 19 reliée à la borne d'entrée 10. Le second condensateur 7 est connecté en série avec la diode 5 entre la borne 19 et le point de jonction 13. Une troisième bobine d'induction 6 est connectée d'une part au point de jonction 17 entre le condensateur 7 et la diode 5 et d'autre part au point de jonction 12. Ce montage sert de convertisseur abaisseur/élévateur avec tension non inversée et courants d'entrée et de sortie continus.

Les figures 7 et 8 illustrent deux variantes des montages des figures 5 et 6 respectivement, dans lesquelles l'entrée du quadripôle est isolée galvaniquement de la sortie. Plus particulièrement, le montage de la figure 7 est semblable à celui de la figure 5 à ceci près que les bobines d'induction 3 et 6 sont constituées par deux transformateurs. Le montage de la figure 8, quant à lui, est semblable à celui de la figure 6 à ceci près que les bobines d'induction 1 et 6 sont constituées par deux transformateurs.

Dans le montage de la figure 9, les éléments réactifs 1, 2 et 3 sont connectés en série entre les bornes d'entrée 10 et de sortie 20. Le transistor 4 est connecté en série avec un second condensateur 7 entre le point de jonction 12 et la borne commune 15. La diode 5 est connectée entre le point de jonction 13 et la borne commune 15. Une troisième bobine d'induction 6 est connectée d'une part au point de jonction 16 entre le drain du transistor 4 et le condensateur 7 et d'autre part au point de jonction 13. Ce montage sert de convertisseur abaisseur/élévateur avec tension inversée et courants d'entrée et de sortie continus.

Les figures 10 à 16 représentent également des montages de convertisseur abaisseur/élévateur avec tension inversée. Dans le montage de la figure 10, les éléments réactifs 1, 2 et 3 sont connectés en série entre les bornes d'entrée 10 et de sortie 20. Un second condensateur 7 est connecté en série avec le transistor 4 entre la borne commune 15 et le point de jonction 12. La diode 5 est connectée entre la borne commune 15 et le point de jonction 13. Une troisième bobine d'induction 6 se trouve connectée d'une part au point de jonction 16 entre le transistor 4 et le condensateur 7 et d'autre part au point de jonction 13.

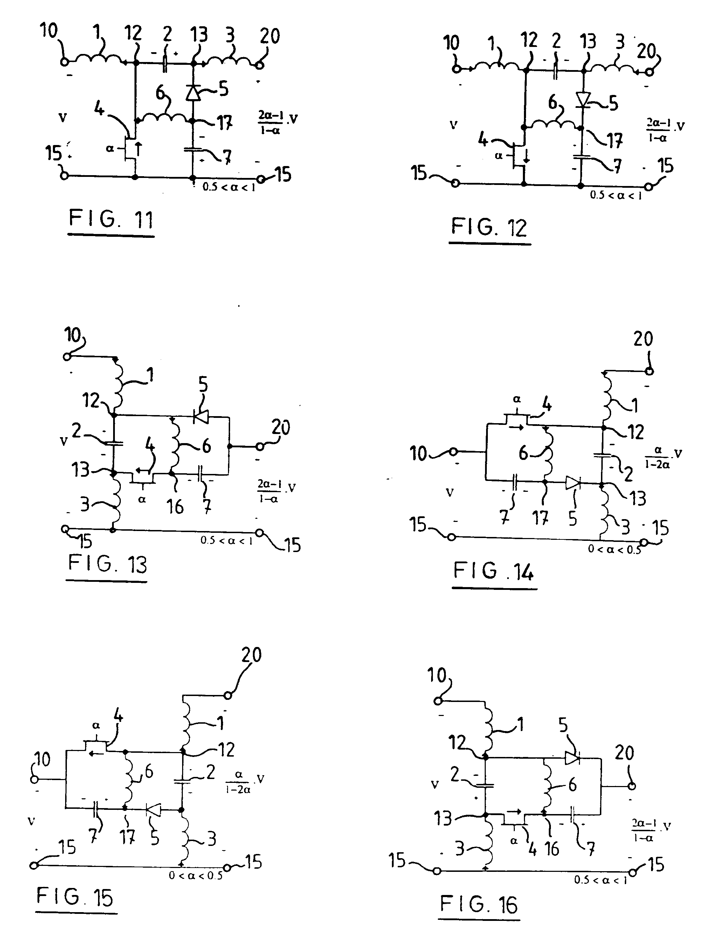

Dans le montage de la figure 11, les éléments réactifs 1, 2 et 3 sont connectés en série entre les bornes d'entrée 10 et de sortie 20. Le transistor 4 est connecté entre la borne commune 15 et le point de jonction 12. Un second condensateur 7 et la diode 5 sont connectés en série entre la borne commune 15 et le point de jonction 13. Une troisième bobine d'induction 6 est connectée d'une part au point de jonction 12 et d'autre part au point de jonction 17 entre le condensateur 7 et la diode 5.

Le montage de la figure 12 comprend les trois éléments réactifs 1, 2 et 3 connectés en série entre les bornes d'entrée 10 et de sortie 20. Le transistor 4 est connecté entre le point de jonction 12 et la borne commune 15. La diode 5 se trouve connectée en série avec un second condensateur 7 entre le point de jonction 13 et la borne commune 15. Une troisième bobine d'induction 6 est connectée entre le point de jonction 12 et le point de jonction 17 entre la diode 5 et le condensateur 7.

Dans le montage de la figure 13, les trois éléments réactifs 1, 2 et 3 se trouvent connectés en série entre la borne d'entrée 10 et la borne commune 15. La diode 5 est connectée entre la borne de sortie 20 et le point de jonction 12. Un second condensateur 7 est connecté en série avec le transistor 4 entre la borne de sortie 20 et le point de jonction 13. Une troisième bobine d'induction 6 se trouve connectée entre le point de jonction 12 d'une part et le point de jonction 16 entre le condensateur 7 et le transistor 4 d'autre part.

Le montage de la figure 14 comprend les trois éléments réactifs 1, 2 et 3 connectés en série entre la borne de sortie 20 et la borne commune 15. Le transistor 4 est connecté entre la borne d'entrée 10 et le point de jonction 12. Un second condensateur 7 est connecté en série avec la diode 5 entre la borne d'entrée 10 et le point de jonction 13. Une troisième bobine d'induction 6 est connectée entre le point de jonction 12 d'une part et le point de jonction 17 entre la diode 5 et le condensateur 7 d'autre part.

Dans le montage de la figure 15, les trois éléments réactifs 1, 2 et 3 se trouvent connectés en série entre la borne de sortie 20 et la borne commune 15. Le transistor 4 est connecté entre la borne d'entrée 10 et le point de jonction 12. La diode 5 et un second condensateur 7 sont connectés en série entre le point de jonction 13 et la borne d'entrée 10. Une troisième bobine d'induction 6 se trouve connectée entre le point de jonction 12 et le point de jonction 17 entre la diode 5 et le condensateur 7.

La figure 16 représente un montage dans lequel les trois éléments réactifs 1, 2 et 3 se trouvent connectés en série entre la borne d'entrée 10 et la borne commune 15. La diode 5 est connectée entre le point de jonction 12 et la borne de sortie 20. Le transistor 4 est connecté en série avec un second condensateur 7 entre le point de jonction 13 et la borne de sortie 20. Une troisième bobine d'induction 6 se trouve connectée entre le point de jonction 12 et le point de jonction 16 entre le transistor 4 et le condensateur 7.

Chacun des montages décrits dans ce qui précède peut être ajusté de façon optimale pour une application particulière par un dimensionnement adéquat des éléments réactifs de manière à réduire à un minimum les ondulations du courant et de la tension de sortie. De plus, tous les montages décrits ont des propriétés bidirectionnelles, c'est-à-dire que chacune des deux paires de bornes du quadripôle que constitue un montage convertisseur peut être utilisée aussi bien comme entrée que comme sortie.

## Revendications

1. Convertisseur électrique comprenant au moins trois éléments réactifs connectés en série, à savoir une première bobine d'induction (1), un premier condensateur (2) et une deuxième bobine d'induction (3), ledit premier condensateur (2) étant connecté entre la première bobine d'induction (1) et la deuxième bobine d'induction (3) formant ainsi un premier point de jonction (12) et un deuxième point de jonction (13), et un dispositif de commutation comprenant un transistor de commutation (4) et une diode (5), ledit transistor de commutation étant commandé à une fréquence élevée de manière à être rendu conducteur pendant une fraction de chaque période de ladite fréquence,
caractérisé en ce que le dispositif de commutation comprend un second condensateur (7) et une troisième bobine d'induction (6), le second condensateur (7) et un premier élément du groupe formé par le transistor (4) et la diode (5) étant connectés en série l'un avec l'autre et à l'un desdits premier et deuxième points de jonction (12, 13), l'autre élément du groupe précité étant connecté à l'autre desdits premier et deuxième points de jonction (12, 13), la connexion du second condensateur (7) avec ledit premier élément du groupe (4, 5) précité formant un troisième point de jonction. (16), et la troisième bobine d'induction (6) étant connectée entre le troisième point de jonction (16) et l'autre desdits premier et deuxième points de jonction (12, 13) de manière que la diode (5) soit conductrice uniquement lorsque le transistor (4) est non conducteur et qu'elle soit bloquante chaque fois que le transistor (4) est rendu conducteur.

2. Dispositif selon la revendication 1, caractérisé en ce que les éléments réactifs (1, 2, 3) sont connectés en série entre la borne d'entrée (10) et la borne commune (15), en ce que le transistor (4) est connecté entre le point de jonction (12) et la borne de sortie (20), en ce que la diode (5) est connectée en série avec un second condensateur (7) entre le point de jonction (13) et la borne de sortie (20), et en ce qu'une troisième bobine d'induction (6) est connectée d'une part au point de jonction (12) et d'autre part au point de jonction (17) entre la diode (5) et le second condensateur (7).

3. Dispositif selon la revendication 1, caractérisé en ce que les éléments réactifs (1, 2, 3) sont connectés en série entre les bornes d'entrée (10) et de sortie (20), en ce que le transistor (4) est connecté entre le point de jonction (13) et la borne commune (15), en ce que la diode (5) est connectée en série avec un second condensateur (7) entre le point de jonction (12) et la borne commune (15), et en ce qu'une troisième bobine d'induction (6) est connectée d'une part au point de jonction (19) entre la diode (5) et le condensateur (7) et d'autre part au point de jonction (13).

4. Dispositif selon la revendication 1, caractérisé en ce que les éléments réactifs (1, 2, 3) sont connectés en série entre la borne commune (15) et la borne de sortie (20), en ce que la diode (5) se trouve connectée entre la borne d'entrée (10) et le point de jonction (13), en ce que le transistor (4) se trouve connecté en série avec un second condensateur (7) entre la borne d'entrée (10) et le point de jonction (12), et en ce qu'une troisième bobine d'induction (6) se trouve connectée entre le point de jonction (13) précité et le point de jonction (16) entre le second condensateur (7) et le transistor (4).

5. Dispositif selon la revendication 1, caractérisé en ce que les éléments réactifs (1, 2, 3) sont connectés entre la borne d'entrée (10) et la borne commune (15), en ce que le transistor (4) est connecté en série avec un second condensateur (7) entre le point de jonction (12) et une borne (18) reliée à la borne de sortie (20), en ce que la diode (5) est connectée entre le point de jonction (13) et la borne (18) précitée, et en ce qu'il comprend en outre une troisième bobine d'induction (6) connectée d'une part au point de jonction (16) entre le drain du transistor (4) et le condensateur (7) et d'autre part au point de jonction (13).

6. Dispositif selon la revendication 6, caractérisé en ce que les bobines d'induction (3) et (6) sont constituées par des transformateurs.

7. Dispositif selon la revendication 1, caractérisé en ce que les éléments réactifs (1, 2, 3) sont connectés en série entre la borne commune (15) et la borne de sortie (20), en ce que le transistor (4) est connecté entre le point de jonction (12) et une borne (19) reliée à la borne d'entrée (10), en ce qu'un second condensateur (7) est connecté en série avec la diode (5) entre la borne (19) et le point de jonction (13), et en ce qu'une troisième bobine d'induction (6) est connectée d'une part au point de jonction (17) entre le second condensateur (7) et la diode (5) et d'autre part au point de jonction (12).

8. Dispositif selon la revendication 8, caractérisé en ce que les bobines d'induction (1) et (6) sont constituées par des transformateurs.

9. Dispositif selon la revendication 1, caractérisé en ce que les éléments réactifs (1, 2, 3) sont connectés en série entre les bornes d'entrée (10) et de sortie (20), en ce que le transistor (4) est connecté en série avec un second condensateur (7) entre le point de jonction (12) et la borne commune (15), en ce que la diode (5) est connectée entre le point de jonction (13) et la borne commune (15), et en ce qu'une troisième bobine d'induction (6) est connectée d'une part au point de jonction (16) entre le drain du transistor (4) et ledit second condensateur (7) et d'autre part au point de jonction (13).

10. Dispositif selon la revendication 1, caractérisé en ce que les éléments réactifs (1, 2, 3) sont connectés en série entre les bornes d'entrée (10) et de sortie (20), en ce que le transistor (4) est connecté en série avec un second condensateur (7) entre la borne commune (15) et le point de jonction (12), en ce que la diode (5) est connectée entre la borne commune (15) et le point de jonction (13), et en ce qu'une troisième bobine d'induction (6) se trouve connectée d'une part au point de jonction (16) entre le transistor (4) et le second condensateur (7) et d'autre part au point de jonction (13).

11. Dispositif selon la revendication 1, caractérisé en ce que les éléments réactifs (1, 2, 3) sont connectés en série entre les bornes d'entrée (10) et de sortie (20), en ce que le transistor (4) est connecté entre la borne commune (15) et le point de jonction (12), en ce qu'un second condensateur (7) et la diode (5) sont connectés en série entre la borne commune (15) et le point de jonction (13), et en ce qu'une troisième bobine d'induction (6) est connectée d'une part au point de jonction (12) et d'autre part au point de jonction (17) entre le second condensateur (7) et la diode (5).

12. Dispositif selon la revendication 1, caractérisé en ce que les éléments réactifs (1, 2, 3) sont connectés en série entre les bornes d'entrée (10) et de sortie (20), en ce que le transistor (4) est connecté entre le point de jonction (12) et la borne commune (15), en ce que la diode (5) se trouve connectée en série avec un second condensateur (7) entre le point de jonction (13) et la borne commune (15), et en ce qu'une troisième bobine d'induction (6) est connectée entre le point de jonction (12) et le point de jonction (17) entre la diode (5) et le second condensateur (7).

13. Dispositif selon la revendication 1, caractérisé en ce que les éléments réactifs (1, 2, 3) sont connectés en série entre la borne d'entrée (10) et la borne commune (15), en ce que la diode (5) est connectée entre la borne de sortie (20) et le point de jonction (12), en ce qu'un second condensateur (7) est connecté en série avec le transistor (4) entre la borne de sortie (20) et le point de jonction (13), et en ce qu'une troisième bobine d'induction (6) se trouve connectée d'une part au point de jonction (12) et d'autre part au point de jonction (16) entre le second condensateur (7) et le transistor (4).

14. Dispositif selon la revendication 1, caractérisé en ce que les éléments réactifs (1, 2, 3) sont connectés en série entre la borne de sortie (20) et la borne commune (15), en ce que le transistor (4) est connecté entre la borne d'entrée (10) et le point de jonction (12), en ce qu'un second condensateur (7) est connecté en série avec la diode (5) entre la borne d'entrée (10) et le point de jonction (13), et en ce qu'une troisième bobine d'induction (6) est connectée d'une part au point de jonction (12) et d'autre part au point de jonction (17) entre la diode (5) et le second condensateur (7).

15. Dispositif selon la revendication 1, caractérisé en ce que les éléments réactifs (1, 2, 3) sont connectés en série entre la borne de sortie (20) et la borne commune (15), en ce que le transistor (4) est connecté entre la borne d'entrée (10) et le point de jonction (12), en ce que la diode (5) et un second condensateur (7) sont connectés en série entre le point de jonction (13) et la borne d'entrée (10), et en ce qu'une troisième bobine d'induction (6) se trouve connectée d'une part au point de jonction (12) et d'autre part au point de jonction (17) entre la diode (5) et le second condensateur (7).

16. Dispositif selon la revendication 1, caractérisé en ce que les éléments réactifs (1, 2, 3) sont connectés en série entre la borne d'entrée (10) et la borne commune (15), en ce que la diode (5) est connectée entre le point de jonction (12) et la borne de sortie (20), en ce que le transistor (4) est connecté en série avec un second condensateur (7) entre le point de jonction (13) et la borne de sortie (20), et en ce qu'une troisième bobine d'induction (6) se trouve connectée d'une part au point de jonction (12) et d'autre part au point de jonction (16) entre le transistor (4) et le second condensateur (7).

## Patentansprüche

1. Elektrischer Konverter, mindestens bestehend aus drei in Reihe geschalteten aktiven Bauteilen, nämlich einer ersten Induktionsspule (1), einem ersten Kondensator (2) und einer zweiten Induktionsspule (3), wobei der erste Kondensator (2) zwischen die erste Induktionsspule (1) und die zweite Induktionsspule (3) geschaltet ist, wodurch ein erster Verbindungspunkt (12) und ein zweiter Verbindungspunkt (13) gebildet werden, und einer Schaltvorrichtung, bestehend aus einem Schalttransistor (4) und einer Diode (5), wobei dieser Schalttransistor mit hoher Frequenz gesteuert wird, derart, daß er für einen Bruchteil jeder Periode dieser Frequenz leitend wird,
dadurch gekennzeichnet, daß die Schaltvorrichtung einen zweiten Kondensator (7) und eine dritte Induktionsspule (6) umfaßt, wobei der zweite Kondensator (7) und ein erstes Teil der aus dem Transistor (4) und der Diode (5) bestehenden Gruppe miteinander in Reihe und mit einem der beiden Verbindungspunkte, dem ersten (12) oder dem zweiten (13), verbunden sind, wobei das andere Teil der genannten Gruppe an den anderen der genannten Verbindungspunkte, den ersten (12) oder den zweiten (13), angeschlossen ist, wobei die Verbindung des zweiten Kondensators (7) mit dem ersten Teil der genannten Gruppe (4, 5) einen dritten Verbindungspunkt (16) bildet, und wobei die dritte Induktionsspule (6) zwischen den dritten Verbindungspunkt (16) und den anderen der genannten Verbindungspunkte (12, 13) geschaltet ist, derart, daß die Diode (5) nur leitend ist, wenn der Transistor (4) sperrt und daß sie jedesmal sperrt, wenn der Transistor (4) leitet.

2. Vorrichtung nach Patentanspruch 1, dadurch gekennzeichnet, daß die aktiven Bauteile (1, 2, 3) in Reihe zwischen den Eingangsanschluß (10) und den gemeinsamen Anschluß (15) geschaltet sind, dadurch, daß der Transistor (4) zwischen den Verbindungspunkt (12) und den Ausgangsanschluß (20) geschaltet ist, dadurch, daß die Diode (5) in Reihe mit einem zweiten Kondensator (7) zwischen den Verbindungspunkt (13) und den Ausgangsanschluß (20) geschaltet ist, und dadurch, daß eine dritte Induktionsspule (6) einerseits mit dem Verbindungspunkt (12) und andererseits mit dem Verbindungspunkt (17) zwischen der Diode (5) und dem zweiten Kondensator (7) verbunden ist.

3. Vorrichtung nach Patentanspruch 1, dadurch gekennzeichnet, daß die aktiven Bauteile (1, 2, 3) in Reihe zwischen den Eingangsanschluß (10) und den Ausgangsanschluß (20) geschaltet sind, dadurch, daß der Transistor (4) zwischen den Verbindungspunkt (13) und den gemeinsamen Anschluß (15) geschaltet ist, dadurch, daß die Diode (5) in Reihe mit einem zweiten Kondensator (7) zwischen den Verbindungspunkt (12) und den gemeinsamen Anschluß (15) geschaltet ist, und dadurch, daß eine dritte Induktionsspule (6) einerseits mit dem Verbindungspunkt (19) zwischen der Diode (5) und dem Kondensator (7) und andererseits mit dem Verbindungspunkt (13) verbunden ist.

4. Vorrichtung nach Patentanspruch 1, dadurch gekennzeichnet, daß die aktiven Bauteile (1, 2, 3) in Reihe zwischen den gemeinsamen Anschluß (15) und den Ausgangsanschluß (20) geschaltet sind, dadurch, daß die Diode (5) zwischen den Eingangsanschluß (10) und den Verbindungspunkt (13) geschaltet ist, dadurch, daß der Transistor (4) in Reihe mit einem zweiten Kondensator (7) zwischen den Eingangsanschluß (10) und den Verbindungspunkt (12) geschaltet ist, und dadurch, daß eine dritte Induktionsspule (6) zwischen den Verbindungspunkt (13) und den Verbindungspunkt (16) zwischen dem zweiten Kondensator (7) und dem Transistor (4) geschaltet ist.

5. Vorrichtung nach Patentanspruch 1, dadurch gekennzeichnet, daß die aktiven Bauteile (1, 2, 3) zwischen den Eingangsanschluß (10) und den gemeinsamen Anschluß (15) geschaltet sind, dadurch, daß der Transistor (4) in Reihe mit einem zweiten Kondensator (7) zwischen den Verbindungspunkt (12) und einen Anschluß (18) geschaltet ist, der mit dem Ausgangsanschluß (20) verbunden ist, dadurch, daß die Diode (5) zwischen den Verbindungspunkt (13) und den Anschluß (18) geschaltet ist, und dadurch, daß sie außerdem eine dritte Induktionsspule (6) umfaßt, die einerseits mit dem Verbindungspunkt (16) zwischen dem Drain des Transistors (4) und dem Kondensator (7) und andererseits mit dem Verbindungspunkt (13) verbunden ist.

6. Vorrichtung nach Patentanspruch 5, dadurch gekennzeichnet, daß die Induktionsspulen (3) und (6) Transformatoren sind.

7. Vorrichtung nach Patentanspruch 1, dadurch gekennzeichnet, daß die aktiven Bauteile (1, 2, 3) zwischen den gemeinsamen Anschluß (15) und den Ausgangsanschluß (20) geschaltet sind, dadurch, daß der Transistor (4) zwischen den Verbindungspunkt (12) und einen Anschluß (19) geschaltet ist, der mit dem Eingangsanschluß (10) verbunden ist, dadurch, daß ein zweiter Kondensator (7) in Reihe mit der Diode (5) zwischen den Anschluß (19) und den Verbindungspunkt (13) geschaltet ist, und dadurch, daß eine dritte Induktionsspule (6) einerseits mit dem Verbindungspunkt (17) zwischen dem zweiten Kondensator (7) und der Diode (5) und andererseits mit dem Verbindungspunkt (12) verbunden ist.

8. Vorrichtung nach Patentanspruch 7, dadurch gekennzeichnet, daß die Induktionsspulen (1) und (6) Transformatoren sind.

9. Vorrichtung nach Patentanspruch 1, dadurch gekennzeichnet, daß die aktiven Bauteile (1, 2, 3) in Reihe zwischen den Eingangsanschluß (10) und den Ausgangsanschluß (20) geschaltet sind, dadurch, daß der Transistor (4) in Reihe mit einem zweiten Kondensator (7) zwischen den Verbindungspunkt (12) und den gemeinsamen Anschluß (15) geschaltet ist, dadurch, daß die Diode (5) zwischen den Verbindungspunkt (13) und den gemeinsamen Anschluß (15) geschaltet ist, und dadurch, daß eine dritte Induktionsspule (6) einerseits mit dem Verbindungspunkt (16) zwischen dem Drain des Transistors (4) und dem zweiten Kondensator (7) und andererseits mit dem Verbindungspunkt (13) verbunden ist.

10. Vorrichtung nach Patentanspruch 1, dadurch gekennzeichnet, daß die aktiven Bauteile (1, 2, 3) in Reihe zwischen den Eingangsanschluß (10) und den Ausgangsanschluß (20) geschaltet sind, dadurch, daß der Transistor (4) in Reihe mit einem zweiten Kondensator (7) zwischen den gemeinsamen Anschluß (15) und den Verbindungspunkt (12) geschaltet ist, dadurch, daß die Diode (5) zwischen den gemeinsamen Anschluß (15) und den Verbindungspunkt (13) geschaltet ist, und dadurch, daß eine dritte Induktionsspule (6) einerseits mit dem Verbindungspunkt (16) zwischen dem Transistor (4) und dem zweiten Kondensator (7) und andererseits mit dem Verbindungspunkt (13) verbunden ist.

11. Vorrichtung nach Patentanspruch 1, dadurch gekennzeichnet, daß die aktiven Bauteile (1, 2, 3) in Reihe zwischen den Eingangsanschluß (10) und den Ausgangsanschluß (20) geschaltet sind, dadurch, daß der Transistor (4) zwischen den gemeinsamen Anschluß (15) und den Verbindungspunkt (12) geschaltet ist, dadurch, daß ein zweiter Kondensator (7) und die Diode (5) in Reihe zwischen den gemeinsamen Anschluß (15) und den Verbindungspunkt (13) geschaltet sind, und dadurch, daß eine dritte Induktionsspule (6) einerseits mit dem Verbindungspunkt (12) und andererseits mit dem Verbindungspunkt (17) zwischen dem zweiten Kondensator (7) und der Diode (5) verbunden ist.

12. Vorrichtung nach Patentanspruch 1, dadurch gekennzeichnet, daß die aktiven Bauteile (1, 2, 3) in Reihe zwischen den Eingangsanschluß (10) und den Ausgangsanschluß (20) geschaltet sind, dadurch, daß der Transistor (4) zwischen den Verbindungspunkt (12) und den gemeinsamen Anschluß (15) geschaltet ist, dadurch, daß die Diode (5) in Reihe mit einem zweiten Kondensator (7) zwischen den Verbindungspunkt (13) und den gemeinsamen Anschluß (15) geschaltet ist, und dadurch, daß eine dritte Induktionsspule (6) zwischen den Verbindungspunkt (12) und den Verbindungspunkt (17) zwischen der Diode (5) und dem zweiten Kondensator (7) geschaltet ist.

13. Vorrichtung nach Patentanspruch 1, dadurch gekennzeichnet, daß die aktiven Bauteile (1, 2, 3) in Reihe zwischen den Eingangsanschluß (10) und den gemeinsamen Anschluß (15) geschaltet sind, dadurch, daß die Diode (5) zwischen den Ausgangsanschluß (20) und den Verbindungspunkt (12) geschaltet ist, dadurch, daß ein zweiter Kondensator (7) in Reihe mit dem Transistor (4) zwischen den Ausgangsanschluß (20) und den Verbindungspunkt (13) geschaltet ist, und dadurch, daß eine dritte Induktionsspule (6) einerseits mit dem Verbindungspunkt (12) und andererseits mit dem Verbindungspunkt (16) zwischen dem zweiten Kondensator (7) und dem Transistor (4) verbunden ist.

14. Vorrichtung nach Patentanspruch 1, dadurch gekennzeichnet, daß die aktiven Bauteile (1, 2, 3) in Reihe zwischen den Ausgangsanschluß (20) und den gemeinsamen Anschluß (15) geschaltet sind, dadurch, daß der Transistor (4) zwischen den Eingangsanschluß (10) und den Verbindungspunkt (12) geschaltet ist, dadurch, daß ein zweiter Kondensator (7) in Reihe mit der Diode (5) zwischen den Eingangsanschluß (10) und den Verbindungspunkt (13) geschaltet ist, und dadurch, daß eine dritte Induktionsspule (6) einerseits mit dem Verbindungspunkt (12) und andererseits mit dem Verbindungspunkt (17) zwischen der Diode (5) und dem zweiten Kondensator (7) verbunden ist.

15. Vorrichtung nach Patentanspruch 1, dadurch gekennzeichnet, daß die aktiven Bauteile (1, 2, 3) in Reihe zwischen den Ausgangsanschluß (20) und den gemeinsamen Anschluß (15) geschaltet sind, dadurch, daß der Transistor (4) zwischen den Eingangsanschluß (10) und den Verbindungspunkt (12) geschaltet ist, dadurch, daß die Diode (5) und ein zweiter Kondensator (7) in Reihe zwischen den Verbindungspunkt (13) und den Eingangsanschluß (10) geschaltet ist, und dadurch, daß eine dritte Induktionsspule (6) einerseits mit dem Verbindungspunkt (12) und andererseits mit dem Verbindungspunkt (17) zwischen der Diode (5) und dem zweiten Kondensator (7) verbunden ist.

16. Vorrichtung nach Patentanspruch 1, dadurch gekennzeichnet, daß die aktiven Bauteile (1, 2, 3) in Reihe zwischen den Eingangsanschluß (10) und den gemeinsamen Anschluß (15) geschaltet sind, dadurch, daß die Diode (5) zwischen den Verbindungspunkt (12) und den Ausgangsanschluß (20) geschaltet ist, dadurch, daß der Transistor (4) in Reihe mit einem zweiten Kondensator (7) zwischen den Verbindungspunkt (13) und den Ausgangsanschluß (20) geschaltet ist, und dadurch, daß eine dritte Induktionsspule (6) einerseits mit dem Verbindungspunkt (12) und andererseits mit dem Verbindungspunkt (16) zwischen dem Transistor (4) und dem zweiten Kondensator (7) verbunden ist.

## Claims

1. Electric converter comprising at least three reactive elements connected in series, viz. a first induction coil (1), a first capacitor (2) and a second induction coil (3), said first capacitor (2) being connected between the first induction coil (1) and the second induction coil (3) thereby forming a first connection point (12) and a second connection point (13), and a switching device comprising a switching transistor (4) and a diode (5), the switching transistor operating at a high frequency so that it becomes conducting for a fraction of each period of said frequency, characterised in that the switching device comprises a second capacitor (7) and a third induction coil (6), the second capacitor (7) and a first element of the group formed by the transistor (4) and the diode (5) being connected in series with each other and with a first one of said first and second connection points (12, 13), the other element of said group being connected to the other one of said first and second connection points (12, 13), the connection of the second capacitor (7) and said first element of the aforementioned group (4, 5) forming a third connection point (16), and the third induction coil (6) being connected between the third connection point (16) and the other one of said first and second connection points (12, 13) so that the diode (5) is conducting only when the transistor (4) is non-conducting and so that it is non-conductive each time the transistor (4) becomes conducting.

2. Apparatus according to claim 1, wherein the reactive element (1, 2, 3) are connected in series between the input terminal (10) and the common terminal (15); the transistor (4) is connected between the connection point (12) and the output terminal (20); the diode (5) is connected in series with a second capacitor (7) between the connection point (13) and the output terminal (20); and a third induction coil (6) is connected on the one hand to the connection point (17) between the diode (5) and the capacitor (7).

3. Apparatus according to claim 1, wherein the reactive elements (1, 2, 3) are connected in series between the input terminal (10) and the output terminal (20); the transistor (4) is connected between the connection point (13) and the common terminal (15); the diode (5) is connected in series with a capacitor (7) between the connection point (12) and the common terminal (15); and a third induction coil (6) is connected on the one hand to the connection point (19) between the diode (5) and the capacitor (7) and on the other hand to the connection point (13).

4. Apparatus according to claim 1, wherein the reactive elements (1, 2, 3) are connected in series between the common terminal (15) and the output terminal (20); the diode (5) is connected between the input terminal (10) and the connection point (13); a second capacitor (7) is connected in series with the transistor (4) between the input terminal (10) and the connection point (12); and a third induction coil (6) is connected between said connection point (13) and the connection point (16) between the second capacitor (7) and the transistor (4).

5. Apparatus according to claim 1, wherein the reactive elements (1, 2, 3) are connected between the input terminal (10) and the common terminal (15); the transistor (4) is connected in series with a second capacitor (7) between the connection point (12) and a terminal (18) connected to the output terminal (20); the diode (5) is connected between the connection point (13) and said terminal (18); and a third induction coil (6) is connected on the one hand to the connection point (16) between the drain electrode of transistor (4) and the capacitor (7) and on the other hand to the connection point (13).

6. Apparatus according to claim 5, wherein the induction coils (3 and 6) are comprised of transformers.

7. Apparatus according to claim 1, wherein the reactive elements (1, 2, 3) are connected in series between the common terminal (15) and the output terminal (20); the transistor (4) is connected between the connection point (12) and a terminal (19) connected to the input terminal (10); a second capacitor (7) is connected in series with the diode (5) between the terminal (19) and the connection point (13); and a third induction coil (6) is connected on the one hand to the connection point (17) between the capacitor (7) and the diode (5) and on the other hand to the connection point (12).

8. Apparatus according to claim 7, wherein the induction coils (1 and 6) are comprised of transformers.

9. Apparatus according to claim 1, wherein the reactive elements (1, 2, 3) are connected in series between the input terminal (10) and the output terminal (20); the transistor (4) is connected in series with a second capacitor (7) between the connection point (12) and the common terminal (15); the diode (5) is connected between the connection point (13) and the common terminal (15); and a third induction coil (6) is connected on the one hand to the common point (16) between the drain electrode of transistor (4) and said capacitor (7) and on the other hand to the connection point (13).

10. Apparatus according to claim 1, wherein the reactive elements (1, 2, 3) are connected in series between the input terminal (10) and the output terminal (20); a second capacitor (7) is connected in series between the transistor (4) between the common terminal (15) and the connection point (12); the diode (5) is connected between the common terminal (15) and the connection point (13); and a third induction coil (6) is connected on the one hand to the connection point (16) between the transistor (4) and the second capacitor (7) and on the other hand to the connection point (13).

11. Apparatus according to claim 1, wherein the reactive elements (1, 2, 3) are connected in series between the input terminal (10) and the output terminal (20); the transistor (4) is connected between the common terminal (15) and the connection point (12); a second capacitor (7) and the diode (5) are connected in series between the common terminal (15) and the connection point (13); and a third induction coil (6) is connected on the one hand to the connection point (12) and on the other hand to the connection point (17) between the capacitor (7) and the diode (5).

12. Apparatus according to claim 1, wherein the reactive elements (1, 2, 3) are connected in series between the input terminal (10) and the output terminal (20); the transistor (4) is connected between the connection point (12) and the common terminal (15); the diode (5) is connected in series with a second capacitor (7) between the connection point (13) and the common terminal (15) and a third induction coil (6) is connected between the connection point (12) and the connection point (17) between the diode (5) and the second capacitor (7).

13. Apparatus according to claim 1, wherein the reactive elements (1, 2, 3) are connected in series between the input terminal (10) and the common terminal (15); the diode (5) is connected between the output terminal (20) and the connection point (12); a second capacitor (7) is connected in series with the transistor (4) between the output terminal (20) and the connection point (13); and a third induction coil (6) is connected between the connection point (12) on one side and the connection point (16) between the second capacitor (7) and the transistor (4) on the other side.

14. Apparatus according to claim 1, wherein the reactive elements (1, 2, 3) are connected in series between the output terminal (20) and the common terminal (15); the transistor (4) is connected between the input terminal (10) and the connection point (12); a second capacitor (7) is connected in series with the diode (5) between the input terminal (10) and the connection point (13); and a third induction coil (6) is connected between the connection point (12) on one side and the connection point (17) between the diode (5) and the second capacitor (7) on the other side.

15. Apparatus according to claim 1, wherein the reactive elements (1, 2, 3) are connected in series between the output terminal (20) and the common terminal (15); the transistor (4) is connected between the input terminal (10) and the connection point (12); the diode (5) and a second capacitor (7) are connected in series between the connection point (13) and the input terminal (10); and a third induction coil (6) is connected between the connection point (12) on one side and the connection point (17) between the diode (5) and the second capacitor (7) on the other side.

16. Apparatus according to claim 1, wherein the reactive elements (1, 2, 3) are connected in series between the input terminal (10) and the common terminal (15); the diode (5) is connected between the connection point (12) and the output terminal (20); the transistor (4) is connected in series with a second capacitor (7) between the connection point (13) and the output terminal (20); and a third induction coil (6) is connected between the connection point (12) on one side and the connection point (16) between the transistor (4) and the capacitor (7) on the other side.
